# EUROPÄISCHE PATENTANMELDUNG

(11) **EP 2 628 664 A1**
(43) Veröffentlichungstag der Anmeldung: **21.08.2013**
(21) Anmeldenummer: 12175574.8
(22) Anmeldetag: 09.07.2012
(51) Int. Cl.: B62D 25/12, E05D 5/02

(54) **Haubenscharnier**

(71) Anmelder: ISE Automotive GmbH, 51702 Bergneustadt (DE)
(72) Erfinder: Olfert, Johann, 51702 Bergneustadt (DE); Siegert, Viktor, 51580 Reichshof-Eckenhagen (DE)
(74) Vertreter: Kalkoff & Partner

(57) **Zusammenfassung**

Die Erfindung betrifft ein Haubenscharnier zur gelenkigen Anordnung einer Haube an einem Fahrzeug, mit einem mit der Haube verbindbaren Scharnieroberteil, einem mit einem Karosseriebauteil verbindbaren Scharnierunterteil, wobei das Scharnieroberteil und das Scharnierunterteil zur Verstellung der Haube zwischen einer Schließposition und einer Öffnungsposition um eine Scharnierschwenkachse gelenkig miteinander verbunden sind. Um eine Haubenscharnier der eingangs genannten Art bereitzustellen, das eine reversible Verlagerung des Scharnieroberteils im Falle eines Seitenaufpralls ermöglicht und gleichzeitig im Normalbetrieb eine hohe Funktionssicherheit aufweist, wird eine Rampenvorrichtung vorgeschlagen, die mit dem Scharnieroberteil und/oder dem Scharnierunterteil derart in Wirkverbindung steht, dass sie im Crashfall, mit einer dabei auftretenden parallel zur Schwenkachse auf das Scharnieroberteil und/oder das Scharnierunterteil wirkenden Kraftkomponente, eine Verlagerungsbewegung des Scharnieroberteils bewirkt, die eine vertikale sowie eine in Schwenkachsenrichtung gerichtete Bewegungskomponente aufweist.

## Beschreibung

Die Erfindung betrifft ein Haubenscharnier zur gelenkigen Anordnung einer Haube an einem Fahrzeug, mit einem mit der Haube verbindbaren Scharnieroberteil, einem mit einem Karosseriebauteil verbindbaren Scharnierunterteil, wobei das Scharnieroberteil und das Scharnierunterteil zur Verstellung der Haube zwischen einer Schließposition und einer Öffnungsposition um eine Scharnierschwenkachse gelenkig miteinander verbunden sind.

Haubenscharniere der eingangs genannten Art, beispielweise Fronthaubenscharniere sind bereits in vielfältigen Ausführungsformen aus dem Stand der Technik bekannt. Sie dienen zur schwenkbaren Aufnahme der Haube, bspw. einer Motorhaube eines Kraftfahrzeuges und können zwischen einer Schließposition, in der die Haube, in der Regel gesichert durch ein Haubenschloss, beispielsweise einen Motorraum überdeckt und einer Öffnungsposition, welche den Zugang zu einem unter der Haube angeordneten Motorraum ermöglicht, verstellt werden.

Auch zur Verringerung des Ausmaßes crashbedingter Beschädigungen von an den Scharnierteilen angeordneten oder benachbarten Karosseriebauteilen sind der Literatur zahlreiche Ansätze zu entnehmen. So wird beispielsweise in der DE 199 59 892 ein flexibel angeordneter Kotflügel offenbart, der bei einem Niederdrücken einer an den Kotflügel angrenzenden Haube über eine Rampe von der Haube wegbewegbar gehalten wird. Die JP 131 703 beschreibt eine energieabsorbierende Scharniervorrichtung, die im Falle eines Seitenaufpralls eine Bewegung der Kotflügelkante seitlich nach außen und gleichzeitig in Richtung auf die Fahrzeugvorderseite ermöglicht. Ziel ist hier eine möglichst geringe Deformation des Kotflügels bei einem Seitenaufprall.

Nachteilig zeichnen sich die bekannten Vorrichtungen dadurch aus, dass sie im Falle eines Seitenaufpralls nicht die gewünschte Wirkung zeigen oder aber mit einer irreversiblen Deformation einer Scharnierkomponente einhergehen. Zudem ist die gemäß der JP 131 703 erstrebte Crashdeformation des Scharnierunterteils und die damit einhergehende schonende Verlagerung des Kotflügels, nur mit einem vergleichsweise großen Energieeintrag erreichbar, so dass möglicherweise ein bereits schwacher Seitenaufprall eher eine Deformation des relativ dünnen Kotflügelblechs bewirken würde, als den Scharnierbügel in gewünschter Art zu verbiegen.

Der Erfindung liegt daher die Aufgabe zugrunde, ein Haubenscharnier der eingangs genannten Art bereitzustellen, das eine crashbedingte Verlagerung des Scharnieroberteils insbesondere im Falle eines Seitenaufpralls ermöglicht und gleichzeitig im Normalbetrieb eine hohe Funktionssicherheit aufweist.

Die Erfindung löst die Aufgabe durch ein Haubenscharnier mit den Merkmalen des Anspruchs 1. Vorteilhafte Weiterbildungen der Erfindung sind in den abhängigen Ansprüchen angegeben.

Wesentlich für das erfindungsgemäße Haubenscharnier ist, dass ein mit der Haube verbindbares Scharnieroberteil und ein mit einem Karosseriebauteil verbindbares Scharnierunterteil zur Verstellung der Haube zwischen einer Schließposition und einer Öffnungsposition um eine Schwenkachse schwenkbar gelenkig miteinander verbunden sind. Erfindungsgemäß weist dabei das Haubenscharnier eine Rampenvorrichtung auf, die mit dem Scharnieroberteil und/oder dem Scharnierunterteil derart in Wirkverbindung steht, dass sie im Crashfall, mit einer dabei auftretenden parallel zur Schwenkachse auf das Scharnieroberteil und/oder das Scharnierunterteil wirkenden Kraftkomponente, eine Verlagerungsbewegung des Scharnieroberteils bewirkt, die eine vertikale sowie eine in Schwenkachsenrichtung gerichtete Bewegungskomponente aufweist. Dabei wird das obere Scharnierteil an dem unteren Scharnierteil vorbeigeführt.

Hierdurch ist gewährleistet, dass beispielsweise eine am Scharnieroberteil angeordnete Haube, beispielsweise Fronthaube im Falle eines Seitenaufpralls aus dem Kollisionsbereich mit einem benachbart angeordneten Kotflügel herausbewegt wird. Der Bewegungsablauf der Verlagerungsbewegung des Scharnieroberteils ist dabei abhängig von der Ausgestaltung der Rampenvorrichtung und setzt sich bevorzugt aus einer in ihren Anteilen konstanten oder variierenden Überlagerung von vertikaler und horizontaler Bewegungskomponente zusammen.

Damit zeichnet sich die Erfindung in vielfacher Weise vorteilhaft aus. Einerseits vermag die Rampenvorrichtung crashbedingte Beschädigungen von an den Scharnierteilen angeordneten oder benachbarten Karosseriebauteilen, insbesondere einer Haube und/oder eines Kotflügels durch die im Falle eines Seitenaufpralls einwirkende Kraft zuverlässig zu vermeiden, wobei die Haube zusammen mit der Verlagerung des Scharnieroberteils in eine oberhalb und den Kotflügel abschnittsweise überdeckende Position verlagert wird. Andererseits ermöglicht die Erfindung die Auslösung des Verlagerungsmechanismus sowie die Verlagerungsbewegung des Scharnieroberteils und des daran angeordneten Karosserieteils an sich, allein durch den Eintrag von Crashenergie. Demgemäß sorgt die Erfindung zugleich für eine Vermeidung der Beschädigung von Karosserieteilen wie auch für eine deformationsfreie Energieabsorption der beim Seitenaufprall frei werdenden Crashenergie. Nachdem die durch die Rampenvorrichtung gewährleistete crashbedingte Verlagerungsbewegung nicht mit einer Beschädigung des Scharniers oder der Rampenvorrichtung einhergeht, können Rampenvorrichtung und Scharnieroberteil vom Fachmann mit einfachen Mitteln aus der Crashposition in die Normalposition zurückverlagert werden.

Dabei kann die Rampenvorrichtung beliebig am Scharnieroberteil aber auch am Scharnierunterteil angeordnet sein. In einer bevorzugten Ausführungsform ist die Rampenvorrichtung am Scharnierunterteil angeordnet. Insbesondere bevorzugt ist die Rampenvorrichtung von den Seiten eines zumindest abschnittsweise in Form eines rechtwinkligen Profils ausgebildeten Scharnierunterteils umgeben, wobei die Öffnung des rechtwinkligen Profils in Richtung auf das Scharnieroberteil ausgerichtet ist. Diese Anordnung bietet den Vorteil, dass die Rampenvorrichtung einerseits gegen äußere Einwirkung geschützt ist und andererseits in der Schließposition des Scharniers eine direkte Wirkverbindung zum Scharnieroberteil gegeben ist.

Der Rampenmechanismus ist grundsätzlich beliebig ausführbar. So kann die Rampenvorrichtung für die angestrebte Verlagerungsbewegung des Scharnieroberteils oder eines Abschnitts davon mit starr am Scharnieroberteil und/oder am Scharnierunterteil angeordneten Gleitflächen ausgebildet sein. Zur Verminderung des Risikos einer erhöhten Reibhaftung zwischen den Gleitflächen, welche unter Umständen zu einem möglichen Versagen der Vorrichtung führen kann, weist die Rampenvorrichtung besonders bevorzugt eine beweglich angeordnete Rampenplatte auf, die im Falle eines Seitenaufpralls durch die eingebrachte Crashenergie von einer Normalposition in eine Crashposition verlagerbar, beispielsweise verschwenkbar oder verdrehbar ist.

Im Falle einer vorteilhafterweise vorgesehenen verlagerbaren Anordnung der Rampenplatte am Scharnierunterteil ist diese besonders bevorzugt in ihrer Normallage gesichert, wobei die Lagesicherung in beliebiger Form erfolgen kann. In einer bevorzugten Ausführungsform weist die Rampenvorrichtung eine Stegplatte auf, die starr mit dem Scharnierunterteil verbunden ist. Im Falle der Verwendung eines rechtwinkligen Profils zur Bildung des Scharnierunterteils ist besonders bevorzugt vorgesehen, dass die Stegplatte zwischen den rechtwinklig zueinander angeordneten Seiten des Scharnierunterteils angeordnet ist, wodurch eine zuverlässige Abstützung gewährleistet wird.

Die Verbindung zwischen Stegplatte und Scharnierunterteil kann dabei ebenfalls beliebiger Art sein. Bevorzugt ist eine kraft- und/oder formschlüssige Verbindung. Stegplatte und Rampenplatte sind derart miteinander verbunden, dass einerseits die Rampenplatte sicher an der Rampenvorrichtung gehalten ist und andererseits eine zuverlässige Verlagerung, beispielsweise Verschwenkung der Rampenplatte gegenüber dem Scharnierunterteil möglich ist. In bevorzugter Weise ist die Rampenplatte mit einer Ausnehmung, beispielsweise einer Bohrung versehen und über ein durch diese Ausnehmung geführtes Verbindungselement mit der Stegplatte formschlüssig verbunden.

Das Verbindungselement selbst kann ebenfalls von beliebiger Form und aus beliebigem, den Stabilitätsansprüchen genügendem Material, wie beispielsweise Metall oder hochfestem Kunststoff gebildet sein. Es kann einen eckigen aber auch einen kreisförmigen Querschnitt aufweisen. Bevorzugt weist es im Verbindungsabschnitt mit der Rampenplatte einen kreisförmigen Querschnitt auf, so dass die Rampenplatte gegenüber der Stegplatte und damit auch gegenüber dem Scharnierunterteil verdrehbar gelagert ist. Die Verbindung des Verbindungselements mit der Stegplatte ist in beliebiger Art starr und insbesondere verdrehsicher ausgebildet.

Die Anordnung von Stegplatte, Verbindungselement und Rampenplatte und somit die Ausrichtung der Rampenvorrichtung in Bezug auf das Scharnier ist derart, dass die Rampenplatte im Falle einer parallel zur Schwenkachse des Scharniers auf das Scharnier einwirkenden Kraft um eine Drehachse aus ihrer Normalposition in eine Crashposition verlagerbar, bevorzugt verschwenkbar ist. Im Falle einer verschwenkbaren Anordnung verläuft die Schwenkachse durch die Verbindungsachse des zwischen Rampenplatte und Stegplatte angeordneten Verbindungselementes, welche gleichzeitig senkrecht zur Scharnierschwenkachse ausgerichtet ist.

Rampenplatte und Stegplatte können im Hinblick auf Form und Material beliebig ausgestaltet sein. Vorzugsweise bestehen Rampenplatte und Stegplatte aus Metall oder einem vergleichsweise stabilen Material. In einer besonders bevorzugten Ausführungsform kann die Rampenplatte aus einem reibungs- oder geräuschreduzierendem Material beispielsweise Kunststoff oder Verbundwerkstoff ausgebildet oder mit einem solchen beschichtet sein.

Rampenplatte und/oder Stegplatte weisen jeweils eine im Wesentlichen ebene und glatte Ober- und Unterseite auf, die nachfolgend mit Rampenplattenfläche oder Stegplattenfläche bezeichnet wird. Ferner sind die Plattenober- und Unterseite von Rampenplatte bzw. Stegplatte über einen nachfolgend mit Rampenplattenrand bzw. Stegplattenrand bezeichnete Fläche miteinander verbunden.

Die Stegplattenflächen und/oder die Rampenplattenflächen oder allgemein die Plattenflächen können kreisförmig, oval oder eckig ausgebildet sein. Vorzugsweise weisen die Steg- und Rampenplattenfläche jeweils polygonale Begrenzungen auf.

In einer bevorzugten Ausführung der Erfindung ist die Ausnehmung in der Rampenplatte zur Aufnahme des Verbindungselementes in der Rampenplatte mittig oder exzentrisch zur Mittenachse in der Plattenfläche der Rampenplatte angeordnet. Im Falle einer exzentrischen Anordnung der Ausnehmung in der Rampenplatte steht die senkrecht zur Rampenplattenfläche verlaufende Schwenk- oder Drehachse, um die die Rampenplatte verlagerbar ist, ebenfalls exzentrisch in Bezug auf die Rampenplattenfläche. Eine parallele Ausrichtung von Steg- und Rampenplattenflächen stellt eine besonders stabile und somit weiter bevorzugte Anordnung dar.

Um eine besonders sichere und zuverlässige Funktion der Vorrichtung zu gewährleisten, ist die Rampenvorrichtung in der Schließposition des Scharniers vorzugsweise in Wirknähe von zumindest Abschnitten des Scharnieroberteils angeordnet.

Gemäß einer Weiterbildung der Erfindung ist der äußere Rampenplattenrand zumindest abschnittsweise als Gleitfläche ausgebildet, die je nach Position der Rampenplatte mit zumindest einem Abschnitt einer Anlagefläche oder einer Anlagekante des Scharnieroberteils oder einer mit diesem verbundenen Koppel in Wirkverbindung steht. Bevorzugt ist die Wirkverbindung derart ausgebildet, dass in Abhängigkeit von der jeweiligen Rampenplattenposition jeweils ein Abschnitt der Gleitfläche an zumindest einem Abschnitt einer Anlagefläche oder and der Anlagekante des Scharnieroberteils oder der Koppel anliegt.

Eine zur Scharnierschwenkachse parallel verlaufende und auf das Scharnieroberteil und/oder das Scharnierunterteil gerichtete Kraft wird damit entsprechend der oben erläuterten Wirkverbindung zwischen Rampenplatte und Koppel bzw. Scharnieroberteil von einem Abschnitt der Gleitfläche der Rampenplatte auf einen Abschnitt einer Anlagefläche bzw. Anlagekante des Scharnieroberteils oder einer mit diesem verbundenen Koppel übertragen. Daraus resultiert eine Wirkachse, entlang welcher diese Kraftübertragung erfolgt und die einerseits parallel zur einwirkenden Kraft und andererseits senkrecht zur Anlagefläche bzw. Anlagelinie verläuft, die sich aus eben dieser jeweiligen abschnittsweisen Anlage von Gleitfläche und Anlagefläche bzw. Anlagekante ergibt.

In einer bevorzugten Ausführungsform sind Rampenplatte und Scharnieroberteil bzw. Koppel derart ausgebildet und angeordnet, dass die Wirkachse der vom Gleitflächenabschnitt der Rampenplatte auf den Anlageflächenabschnitt oder die Anlagekante des Scharnieroberteils oder einer mit diesem verbundenen Koppel übertragenen Kraft tangential zur Drehachse verläuft, um die die Rampenplatte infolge der Krafteinwirkung verschwenkt wird. Hierzu ist der Kraftangriffspunkt bevorzugt etwas versetzt beispielsweise oberhalb der Drehachse, so dass sichergestellt ist, dass eine in Scharnierschließposition parallel zur Scharnierschwenkachse, also seitlich auf das Scharnieroberteil und/oder Scharnierunterteil auftreffende Kraft derart auf die Rampenvorrichtung übertragen wird, dass die Rampenplatte um die Drehachse verschwenkt wird. Damit ist gewährleistet, dass eine Kraftübertragung von Rampenplatte auf das Scharnieroberteil nach genannter Art das Scharnieroberteil zumindest abschnittsweise in einer sich überlagernden vertikalen und horizontalen Bewegung, bevorzugt mit einer nach oben und in Bezug auf die Fahrzeugquerachse nach außen gerichteten Komponente verlagert.

Gemäß einer Weiterbildung der Erfindung kann die Gleitfläche der Rampenplatte mindestens einen ebenen Abschnitt aufweisen, der bei Erreichen der Crashposition der Rampenplatte an einer Anlagefläche des Scharnieroberteils oder einer mit dieser verbundenen Koppel anliegt. Gleitflächenabschnitt der Rampenplatte und Anlagefläche des Scharnieroberteils beziehungsweise der Koppel können damit in einer solchen Position bevorzugt derart zueinander ausgerichtet sein, dass eine in Schwenkachsenrichtung auf Scharnieroberteil und/oder Scharnierunterteil einwirkende Kraft keine weitere Verlagerung der Rampenplatte bewirken kann.

Um im Normalbetrieb ein ungewolltes Verlagern des Scharniers, gegebenenfalls ausgelöst durch eine geringfügige und nicht crashbedingte Krafteinwirkung zu verhindern, ist die Rampenvorrichtung und bevorzugt die Rampenplatte in ihrer Normalposition gesichert. Diese Sicherung kann mit beliebigen Mitteln, wie beispielsweise auch durch die geeignete Anordnung von im Crashfall aktuatorauslösbaren Sperrelementen, erreicht werden. Bevorzugt ist die Rampenplatte jedoch in Richtung auf die Normalposition vorgespannt. In einer weiteren bevorzugten Ausführungsform ist die Rampenplatte durch ein in Richtung auf die Normalposition vorgespanntes Zugelement, bevorzugt eine Zugfeder gesichert. Um dies zu erreichen ist das Zugelement einenends form- oder stoffschlüssig am Scharnierunterteil befestigt. Das freie Ende des Zugelements ist kraftschlüssig mit der Rampenplatte verbunden. Dazu weist die Rampenplatte oder die Rampenplattenrandfläche eine Ausnehmung oder einen hakenförmigen Vorsprung auf, mit dem sich das Zugelement sich bei großer Krafteinwirkung lösbar in Eingriff befindet. Der für ein außer Eingriff bringen von Zugelement und Rampenplatte notwendige Energieeintrag kann vorteilhaft durch entsprechende Dimensionierung des Zugelementes variabel gehalten werden. Damit ist es möglich, die Auslöseschwelle der Rampevorrichtung an fahrzeugspezifische Parameter anzupassen und somit auch die Funktionssicherheit der Rampenvorrichtung für verschiedenartige Fahrzeuge zu gewährleisten.

Ein Ausführungsbeispiel der Erfindung wird nachfolgend mit Bezug auf die Zeichnungen näher erläutert. In den Zeichnungen zeigen:
- Fig. 1: eine Seitenansicht einer ersten Ausführungsform eines Haubenscharniers mit einer ersten Ausführungsform einer Rampenvorrichtung in Crashposition;
- Fig. 2: eine Schnittansicht des Haubenscharniers mit Blick auf die Rampenvorrichtung von Fig. 1 in Normalposition
- Fig. 3: eine Schnittansicht des Haubenscharniers von Fig. 1 mit Blick auf die Rampenvorrichtung von Fig. 1 in Crashposition
- Fig. 4: eine Explosionsansicht eines Scharnierunterteilabschnitts mit einer Rampenvorrichtung gemäß der Ausführungsform des Haubenscharniers von Fig. 1;

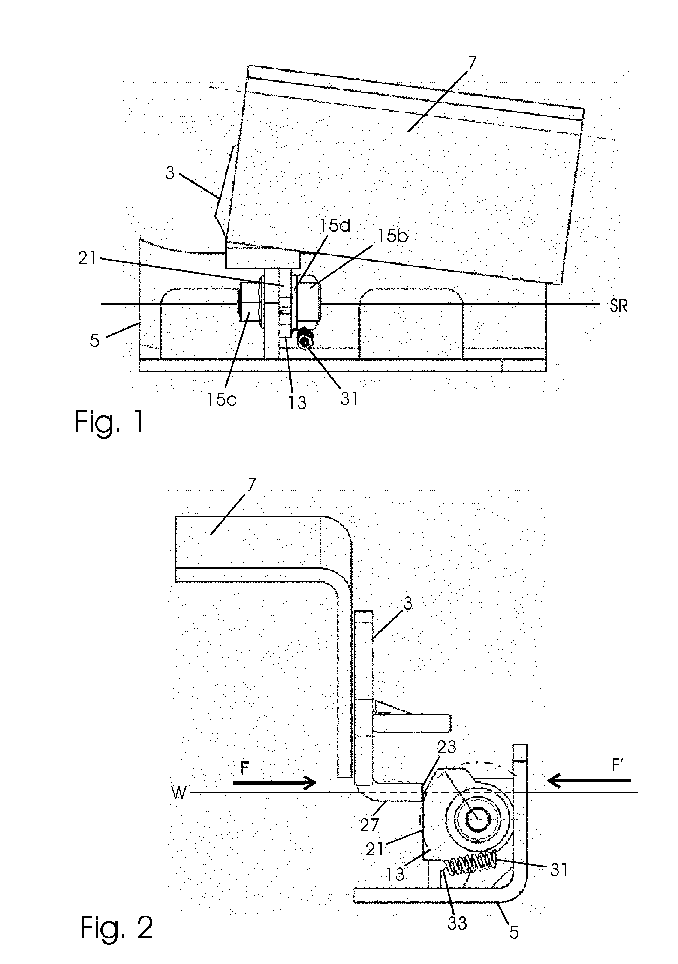

In Fig. 1 ist eine erste Ausführungsform eines Haubenscharniers 1 in einer seitlichen Darstellung abgebildet. Das Haubenscharnier 1 weist ein an einer hier nicht dargestellten Karosserie anordbares Scharnierunterteil 5 auf. Dieses ist über einen hier nicht dargestellten, sich durch Lagerbolzenaufnahmen am Scharnierunterteil 5 und an der Koppel 3 Scharnieroberteils 7 erstreckenden Lagerbolzen zur Verstellung zwischen einer Schließ- und einer Öffnungsposition um eine nicht dargestellte Scharnierschwenkachse S verschwenkbar gelenkig mit der Koppel 3 verbunden. Koppel 3 und Scharnieroberteil 7 sind in beliebiger Weise stoff- und/oder formschlüssig miteinander verbunden.

An dem Scharnierunterteil 5 ist eine Rampenvorrichtung 6 aufweisend eine mit dem Scharnierunterteil 5 starr verbundene Stegplatte 11 sowie eine relativ zum Scharnierunterteil 5 und zur Stegplatte 11 beweglich angeordnete Rampenplatte 13 angeordnet. Rampenplatte 13 und Stegplatte 11 sind über ein schraubenförmiges Verbindungselement 15 miteinander gelenkig verbunden. Die Plattenflächen von Rampenplatte 13 und Stegplatte 11 sind senkrecht in Bezug auf das Scharnieroberteil 3 ausgerichtet. In einer bevorzugten Ausführungsform können die Plattenflächen von Rampenplatte 13 und Stegplatte 11 parallel zueinander ausgerichtet sein. In der dargestellten Ausführungsform ist die Rampenplatte 13 durch einen Schraubenkopf 15b und eine Kontermutter 15c, die das Verbindungselement 15 jeweils auf der freien Seite von Rampenplatte 13 und Stegplatte 11 begrenzen, an der Stegplatte 11 form- und/oder kraftschlüssig gegen ein Herausgleiten aus der Rampenvorrichtung 6 gesichert. Im Verbindungsabschnitt mit der Rampenplatte 13 ist das Verbindungselement 15 mit einem Distanzbuchse 15d mit Bund 15e umgeben. Die Verbindungselemente 15a-c sorgen für eine kraft- und formschlüssige und insbesondere verdrehsichere Verbindung zwischen Distanzbuchse 15d mit Bund 15e und Stegplatte 11. Die Rampenplatte 13 ist auf der Distanzbuchse 15d drehbar gelagert. Dazu wird ausführungsgemäß die Distanzbuchse 15d-e durch eine Schraube 15a-c gegen die Stegplatte festgeschraubt, nachdem der Durchmesser der Bohrung 11a in der Stegplatte kleiner ist als der äußere Durchmesser der Distanzbuchse 15d des durch die Bohrung 13a der Rampenplatte 13 durchgeführten Abschnitts und der Bund 15e einen größeren Durchmesser aufweist als die Bohrung 13a in der Rampenplatte 13.

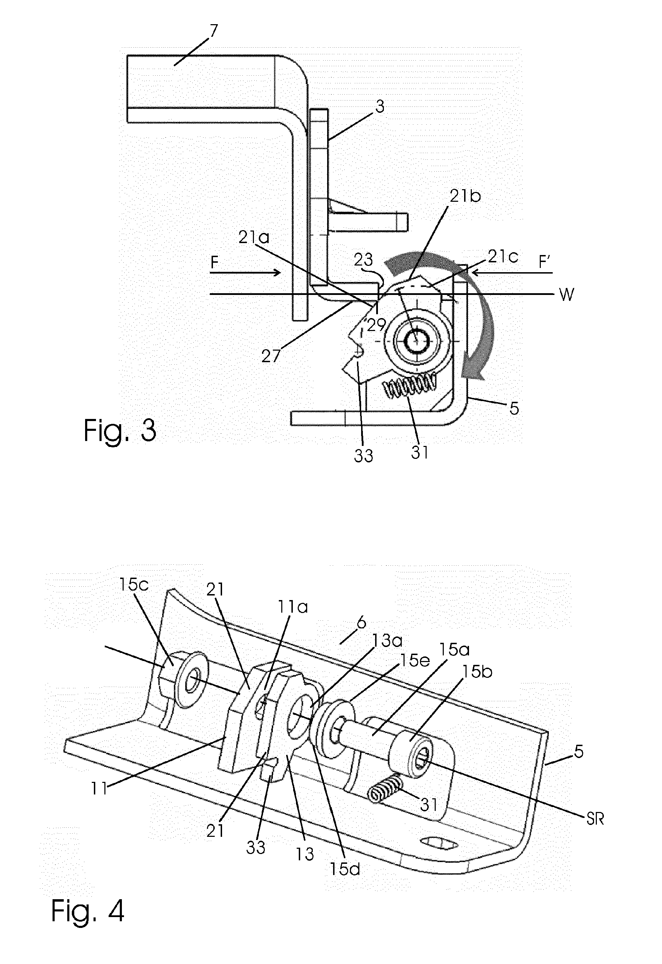

In Fig. 2 ist ein Schnitt des Haubenscharniers 1 gemäß Fig. 1 dargestellt, wobei hier das Scharnieroberteil 7 und die Koppel 3 in einer nicht gegenüber dem Schamierunterteil 5 verschwenkten Normalposition abgebildet ist. Koppel 3 und Scharnierunterteil 5 sind im betrachteten Abschnitt jeweils rechtwinklig ausgebildet. Die Rampenvorrichtung 6 ist zwischen den rechtwinklig zueinander ausgerichteten Wänden des Scharnierunterteils 5 angeordnet, wobei die Rampenvorrichtung 6 in Wirkverbindung mit der Koppel 3 des Scharnieroberteils 7 steht. Die Rampenplatte 13 ist über eine Zugfeder 31, die einenends mit dem Scharnierunterteil 5 verbunden ist und anderenends in Eingriff befindlich ist mit einem hakenförmigen Vorsprung 33 der Rampenplatte 13, auf ihre Normalposition vorgespannt. Eine im Falle eines Seitenaufpralls einwirkende Kraft F oder F' bringt die Zugfeder 31 außer Eingriff mit dem Vorsprung 33 der Rampenplatte 13. Diese parallel zur nicht dargestellten Scharnierschwenkachse S auf die Koppel 3 das damit verbundene Scharnieroberteil 7 und/oder auf das Scharnierunterteil 5 einwirkende Kraft F bzw. F' wird entlang einer Wirkachse W von der Koppel 3 bzw. des Scharnieroberteils 7 und/oder vom Scharnierunterteil 5 auf die Rampenplatte 13 übertragen. Die Wirkachse W verläuft dabei tangential zur Schwenk- oder Drehachse SR. Infolgedessen schiebt die Kraft F und/oder F' Abschnitte der Gleitfläche 21 der Rampenplatte 13 zunächst gegen Abschnitte der Anlagefläche 23 der Koppel 3 des Scharnieroberteils 7. Dadurch wird die Rampenplatte 13 um die Dreh- oder Schwenkachse SR verschwenkt (Fig. 3). Gleitfläche 21 der Rampenplatte 13 und Anlagefläche 23 bzw. Anlagekante 29 der Koppel 3 werden durch die Drehbewegung der Rampenplatte 13 aneinander vorbeigeführt. Gleichzeitig wird über diese Bewegung die Koppel 3 mitsamt dem Scharnieroberteil 7 und einer daran angeordneten, hier nicht dargestellten Haube in eine erhöhte und seitliche verschobene, nicht dargestellte Crashposition verlagert.

Die Ausgestaltung der Gleitfläche 21 könnte in der Weise sein, dass in der Crashposition die Anlagefläche 27 der Koppel 3 an der Anlagefläche 21a der Gleitfläche 21 der Rampenplatte 13 anliegen und damit ein Endanschlag für die Verlagerungsbewegung sowohl der Rampenplatte 13 als auch des Scharnieroberteils 7 mit der daran angeordneten, hier nicht dargestellten Haube ausgebildet würde.

Fig. 4 zeigt eine Explosionsdarstellung der in Fig. 1-3 dargestellten Ausführungsform einer Rampenvorrichtung 6, aufweisend die Stegplatte 11, die Rampenplatte 13 mit der Bohrung 13 a sowie der Gleitfläche 21 mit den Anlageflächen 21a, 21b, 21c und dem Vorsprung 33. Rampenplatte 13 und Stegplatte 11 sind parallel zueinander ausgerichtet und über ein schraubenartiges Verbindungselement 15 derart verbunden, dass die Rampenplatte 13 um eine Dreh- oder Schwenkachse SR verschwenkbar und form- und/oder kraftschlüssig an der Stegplatte 11 angeordnet ist. Ferner ist die rechtwinklige Ausgestaltung des die Rampenvorrichtung 6 aufnehmenden Abschnitts der Koppel 3 des Scharnieroberteils 7 entnehmbar.

## Patentansprüche

1. Haubenscharnier zur gelenkigen Anordnung einer Haube an einem Fahrzeug, mit einem mit der Haube verbindbaren Scharnieroberteil einem mit einem Karosseriebauteil verbindbaren Scharnierunterteil, wobei das Scharnieroberteil und das Scharnierunterteil zur Verstellung der Haube zwischen einer Schließposition und einer Öffnungsposition um eine Scharnierschwenkachse schwenkbar gelenkig miteinander verbunden sind **gekennzeichnet durch**
eine Rampenvorrichtung (6), die derart ausgebildet ist, dass diese im Crashfall mit einer parallel zur Scharnierschwenkachse (S) auf das Scharnieroberteil (7) und/oder das Scharnierunterteil (5) wirkenden Kraft (F, F') eine Verlagerungsbewegung des Scharnieroberteils (7) bewirkt, die eine vertikale sowie in Scharnierschwenkachsenrichtung gerichtete Bewegungskomponente aufweist.

2. Haubenscharnier nach Anspruch 1, **dadurch gekennzeichnet, dass** die Rampenvorrichtung (6) am Scharnierunterteil (5) angeordnet ist.

3. Haubenscharnier nach Anspruch 1 oder 2, **dadurch gekennzeichnet, dass** die Rampenvorrichtung (6) eine beweglich angeordnete Rampenplatte (13) aufweist, die im Crashfall von einer Normalposition in eine Crashposition verlagerbar ist.

4. Haubenscharnier nach einem der vorhergehenden Ansprüche, **dadurch gekennzeichnet, dass** die Rampenvorrichtung (6) eine starr am Scharnierunterteil (5) angebrachte Stegplatte (11) aufweist.

5. Haubenscharnier nach einem der vorhergehenden Ansprüche, **dadurch gekennzeichnet, dass** die Rampenplatte (13) und die Stegplatte (11) über ein durch Bohrungen (13a, 11a) geführtes Verbindungselement (15, 15a, 15b, 15c) form- und/oder kraftschlüssig verbunden sind.

6. Haubenscharnier nach einem der vorhergehenden Ansprüche, **dadurch gekennzeichnet, dass** die Rampenplatte (13) und die Stegplatte (11) parallel zueinander ausgerichtet sind

7. Haubenscharnier nach einem der vorhergehenden Ansprüche, **dadurch gekennzeichnet, dass** die Rampenplatte (13) gegenüber der Stegplatte (11) um eine zur Scharnierschwenkachse (S) senkrecht stehende Dreh- oder Schwenkachse (SR) verschwenkbar angeordnet ist.

8. Haubenscharnier nach einem der vorhergehenden Ansprüche, **dadurch gekennzeichnet, dass** die Rampenplatte (13) um eine zur Scharnierschwenkachse (S) senkrecht stehende Dreh- oder Schwenkachse (SR) verschwenkbar angeordnet ist.

9. Haubenscharnier nach einem der vorhergehenden Ansprüche, **dadurch gekennzeichnet, dass** die Dreh- oder Schwenkachse (SR) deckungsgleich oder versetzt zur Mittenachse der Rampenplatte (13) verläuft.

10. Haubenscharnier nach einem der vorhergehenden Ansprüche, **dadurch gekennzeichnet, dass** die Rampenvorrichtung (6) in Wirknähe zum Scharnieroberteil (7) oder zu einer mit dem Scharnieroberteil (7) verbundenen Koppel (3) angeordnet ist.

11. Haubenscharnier nach einem der vorhergehenden Ansprüche, **dadurch gekennzeichnet, dass** die Rampenplatte (13) einen Rampenplattenrand aufweist, der als Gleitfläche (21) ausgebildet ist, die mit zumindest Abschnitten einer Anlagefläche (23, 27) oder mit einer Anlagekante (29) des Scharnieroberteils oder der Koppel (3) des Scharnieroberteils (7) in Wirkverbindung steht.

12. Haubenscharnier nach einem der vorhergehenden Ansprüche, **dadurch gekennzeichnet, dass** die im Crashfall einwirkende Kraft (F, F') in Richtung auf die der Anlagefläche (23) oder die Anlagekante (29) einer des Scharnieroberteils (7) oder der Koppel (3) des Scharnieroberteils (7) abgewandten Seite (25) erfolgt.

13. Haubenscharnier nach einem der vorhergehenden Ansprüche, **dadurch gekennzeichnet, dass** aus der Wirkverbindung zwischen der Gleitfläche (21) und der Anlagefläche (23) oder der Anlagekante (29) eine Wirkachse (W) resultiert, die parallel zur Kraft (F, F') verläuft.

14. Haubenscharnier nach einem der vorhergehenden Ansprüche, **dadurch gekennzeichnet, dass** die Wirkachse (W) tangential zur Dreh- oder Schwenkachse (SR) verläuft.

15. Haubenscharnier nach einem der vorhergehenden Ansprüche, **dadurch gekennzeichnet, dass** die Rampenplatte (13) in Richtung auf ihre Normalposition vorgespannt ist.

16. Haubenscharnier nach einem der vorhergehenden Ansprüche, **dadurch gekennzeichnet, dass** in Normalposition eine Zugfeder (31) einenends kraftschlüssig mit einem Vorsprung (33) der Rampenplatte (13) und anderenends mit dem Scharnierunterteil (5) verbunden ist.
